# EUROPÄISCHE PATENTSCHRIFT

(11) **EP 0 936 945 B1**
(45) Veröffentlichungstag und Bekanntmachung des Hinweises auf die Patenterteilung: **10.10.2001**
(21) Anmeldenummer: 97950142.6
(22) Anmeldetag: 07.11.1997
(51) Int. Cl.: B01L 7/00, B01L 3/00, C12Q 1/68, G05D 23/19

(54) **TEMPERIERBLOCK MIT AUFNAHMEN**
TEMPERATURE-REGULATING BLOCK WITH RECEIVERS
BLOC DE REGULATION DE TEMPERATURE DOTE DE LOGEMENTS

(30) Priorität: 08.11.1996 DE 19646116
(43) Veröffentlichungstag der Anmeldung: 25.08.1999
(73) Patentinhaber: EPPENDORF AG, 22339 Hamburg (DE)
(72) Erfinder: BRUST, Rüdiger, D-23911 Ziethen (DE); LENZ, Jürgen, D-22301 Hamburg (DE)
(74) Vertreter: Schaefer, Konrad, Dipl.-Phys.
(86) Internationale Anmeldenummer: EP9706196
(87) Internationale Veröffentlichungsnummer: WO9820976

(56) Entgegenhaltungen:
- WO-A-92/04979
- DE-U- 9 403 134
- US-A- 3 556 731
- US-A- 5 061 630
- US-A- 5 399 840
- US-A- 5 525 300

## Beschreibung

Die Erfindung betrifft einen Temperierblock der im Oberbegriff des Anspruchs 1 genannten Art.

Ein gattungsfremder Temperierblock ist aus der US-PS 5,525,300 bekannt. Bei dieser bekannten Konstruktion sind die Aufnahmen als identische Vertiefungen zur Aufnahme einer Art von Behältern ausgebildet und an den Gitterpunkten eines rechtwinkligen Flächengitters im Temperierblock angeordnet.

Nachteilig ist dabei zunächst die Tatsache, daß nur eine Art von Behältern verwendet werden kann. Sollen, was im Laborbetrieb vorkommt, unterschiedliche Arten von Behältern verwendet werden, so müssen die Temperierblöcke ausgetauscht werden, da bei nicht optimaler Passung der Behälter in die Aufnahmen kein ausreichender Wärmekontakt gegeben ist. Ferner sind bei der bekannten Konstruktion die die Aufnahmen bildenden Vertiefungen in größeren Abständen vorgesehen. Der Temperierblock besitzt folglich eine große Masse und eine daraus resultierende große Wärmekapazität. Daher läßt sich ein solcher Temperierblock nur langsam auf ein anderes Temperaturniveau bringen. Ferner von Nachteil ist auch die sehr gute Wärmeleitfähigkeit des Blockes, die bei Erzeugung eines Temperaturgradienten einen hohen Wärmestrom verursacht, der mit einem hohen Energieaufwand zum Heizen und Kühlen betrieben werden muß. Wird der Temperierblock mit unterschiedlicher Temperierung durch verschiedene Temperiereinrichtungen zur Erzeugung eines Temperaturgradienten verwendet, so strömt zwischen den Temperiereinrichtungen der Wärmestrom auch in dem Bereich zwischen den Vertiefungen, was zu ungleichmäßiger Temperaturverteilung führen kann.

Aus der DE 94 03 134 U1 ist ein gattungsgemäßer Temperierblock bekannt, in den zwei Arten von Gefäßen mit unterschiedlichen Bodenkonturen, jedoch gleichen Durchmessern, in um einen halben Gitterabstand diagonal zu einander versetzten rechtwinkligen Gittern einsetzbar sind. Bei dieser Konstruktion sind jedoch noch zwei weitere Behälterarten auf zwischengeschachtelten Gittern einsetztbar. Es ergibt sich daher eine Anordnung, bei der unterschiedliche Gefäße gleichen Durchmesser abwechselnd ineinandergeschachtelt auf Gitterpunkten nur eines rechtwinkligen Gitters angeordnet sind.

Auch bei dieser Konstruktion sind die Aufnahmen daher in erheblichen Abständen angeordnet, so daß der Temperierblock eine große Masse hat und eine hohe Wärmeleitfähigkeit. Er läßt sich somit ebenfalls nur langsam in seiner Temperatur verändern und benötigt zur Erzeugung eines Temperaturgradienten hohe Wärmeströme.

Die Aufgabe der vorliegenden Erfindung besteht darin, einen Temperierblock der gattungsgemäßen Art zu schaffen, der für unterschiedliche Gefäße eine schnelle Einstellung der optimale Temperaturverteilung gewährleistet.

Diese Aufgabe wird erfindungsgemäß mit den Merkmalen des Kennzeichnungsteiles des Anspruchs 1 gelöst.

Erfindungsgemäß sind zwei Arten von Aufnahmen für zwei unterschiedliche Gefäßarten vorgesehen. Daher kann der Temperierblock sowohl mit Gefäßen der einen Art als auch mit Gefäßen der anderen Art bestückt werden, gegebenenfalls sogar in gemischter Bestückung. Dadurch gestaltet sich die Verwendung des Laborthermostaten sehr flexibel. Durch die große Zahl ineinandergeschachtelt angeordneter, sich fast berührender Vertiefungen ergibt sich eine wesentliche Schwächung des Temperierblockes, so daß dieser insgesamt nur eine sehr geringe Masse aufweist. Dadurch verringert sich wesentlich seine Wärmekapazität, so daß der Temperierblock schneller auf gewünschte Temperaturen gebracht werden kann. Es ist z. B. möglich, Proben in einem Temperierblock nacheinander schnell auf unterschiedliche Temperaturniveaus zu bringen. Durch die Materialschwächung des Temperierblockes ergibt sich auch eine Verringerung seiner Wärmeleitfähigkeit bzw. eine Erhöhung seines Wärmeleitwiderstandes. Wird der Temperierblock mit mehreren unterschiedlich betriebenen Temperiereinrichtungen zur Erzeugung eines Temperaturgradienten betrieben, so genügt angesichts des hohen Wärmeleitwiederstandes ein geringer Wärmefluß, wodurch sich der Energieeinsatz zum Heizen und Kühlen wesentlich verringern läßt. Durch die Anbringung der Vertiefungen von der Aufnahmeseite her verringern sich insbesondere die oberen, zur Aufnahmeseite hin liegenden Dickenbereiche des Temperierblokkes. In diesem Bereich strömt bei unterschiedlicher Beheizung des Temperierblockes zur Erzielung eines Temperaturgradientens also ein geringerer Wärmestrom als in dem unteren Bereich des Temperierblockes. Dadurch wird die Gleichmäßigkeit der Temperaturverteilung verbessert.

Vorteilhaft sind die Merkmale des Anspruches 2 vorgesehen. Auf diese Weise läßt sich der Temperierblock auch für solche Gefäße verwenden. die in einer vorgegebenen Gitteranordnung angeordnet sind, die also beispielsweise in einer Plattenanordnung verbunden sind.

Vorteilhaft sind die Merkmale des Anspruches 3 vorgesehen. Auf diese Weise wird der obere. zur Aufnahmeseite hin liegende Bereich des Temperierblockes weiter geschwächt.

Vorteilhaft sind die Merkmale des Anspruches 4 vorgesehen. Hierdurch wird wiederum dafür gesorgt, daß der Wärmestrom bevorzugt in dem Bereich der Platte strömt. die eine durchgehend gute Wärmeleitfähigkeit aufweist und die Temperaturen im Temperierblock vergleichmäßigt. Es ergibt sich eine Temperatureinstellung im Temperierblock. die im wesentlichen von der Temperaturverteilung in der Platte bestimmt wird. während der die Vertiefungen tragende aufnahmeseitige Teil des Temperierblockes die in der Platte vorliegenden Temperaturen seitlich abgreift. ohne sie störend zu beeinflussen. Die Ausbildung des Temperierblockes mit einem durchgehenden Plattenbereich unterhalb des von Vertiefungen geschwächten Bereiches ist auch von Vorteil zur Erziehlung einer gleichmäßigen Temperatur über dem gesamten Temperierblock. wenn der Temperierblock ohne Temperaturgradient betrieben wird. Der plattenförmige untere Teil des Temperierblockes. der die Kontaktiertläche ausbildet. sorgt ferner auch für guten Kontakt mit dort vorgesehenen Temperiereinrichtungen.

Vorteilhaft sind die Merkmale des Anspruchs 5 vorgesehen. Solche Abschnitte erhöhten Wärmeleitwiderstandes können zur Beeinflussung des Wärmestromes im Temperierblock dienen, beispielsweise zur Verringerung des Wärmestromes zwischen benachbarten Temperiereinrichtungen. wenn mit diesen ein Temperaturgradient erzielt werden soll. Dadurch lassen sich Regelschwingungen in den Regelungen der Temperiereinrichtungen verringern. Die Abschnitte können auch zur örtlichen Beeinflussung des Temperaturgradienten dienen. beispielsweise um die Temperaturkurve über den Temperierblock hinweg zu beeinflussen. z.B. zu linearisieren. Dabei ist die erfindungsgemäße Ausbildung der Abschnitte als Nuten von Vorteil gegenüber der in der eingangs genannten bekannten Konstruktion beschriebenen Ausbildung als Bohrungen. Nuten lassen sich einfacher vorsehen. Insbesondere sind sie gemäß Anspruch 6 von der Kontaktierseite her eingebracht und schwächen somit den durchgehenden Plattenteil des Temperierblockes, der überwiegend zur Wärmeleitung beiträgt. Gemäß Anspruch 7 können die Nuten insbesondere mäanderförmig zwischen den Vertiefungen und Löchern angeordnet sein. um auch bei großer Nuttiefe noch in sicherem Abstand zu diesen verlegt werden zu können.

Vorteilhaft sind die Merkmale des Anspruches 8 vorgesehen. Hierdurch ist es möglich, in einem Temperierblock Proben auf unterschiedliche Temperaturen einzustellen. Auch die eingangs erwähnte bekannte Konstruktion weist bereits diese Möglichkeit auf. erreicht dies jedoch durch an den Enden des Temperierblockes angreifende Temperiereinrichtungen. Demgegenüber hat die erfindungsgemäße Konstruktion den Vorteil, daß durch die großflächige Kontaktierung des Temperierblockes über seine gesamte Länge das gewählte Temperaturprofil sehr schnell eingestellt und besser gegen Umgebungseinflüsse thermostatisiert werden kann. Es besteht ferner ohne Zusatzeinrichtungen die Möglichkeit eines alternativen Betriebes des Temperierblockes auf gleichmäßiger Temperatur was bei der bekannten Konstruktion nur mit einer zusätzlichen. der Kontaktierseite anliegenden Temperiereinrichtung möglich ist. Dabei sind vorteilhaft parallel zu den Feldgrenzen Abschnitte erhöhten Wärmewiderstandes vorgesehen. die unmittelbar an den Grenzen liegen können. um Temperaturregelschwingungen zwischen den Temperiereinrichtungen zu begrenzen oder die über den Temperiereinrichtungen angeordnet sein können. um das Temperaturprofil zu beeinflussen. beispielsweise zu lineanisieren. Diese Abschnitte können als den Querschnitt des Blockes verringernde Nuten ausgebildet sein. Die Kontaktierseite kann auch in Längs- und Querrichtung unterteilt mit Temperiereinrichtungen versehen sein. mit denen ein Temperaturprofil in der einen oder anderen Richtung, z. B. auch abwechselnd, über den Temperierblock hinweg eingestellt werden kann oder sogar in beiden Richtungen.

Vorteilhaft sind die Merkmale des Anspruches 9 vorgesehen. Dadurch werden wie bei der eingangs genannten bekannten Konstruktion möglich. die Behälter nacheinander mit verschiedenen. unterschiedlich temperierten Temperierblöcken in Eingriff gebracht. die entweder einen Temperaturgradienten oder auch eine über ihre Fläche konstante Temperatur aufweisen. Die Temperierblöcke können zur Seitenbewegung in einem seitlich verschiebbaren Schlitten angeordnet sein. Sie können zu diesem Zweck auch in einem Rotor angeordnet sein. der beispielsweise karusselartig in einer Ebene parallel zum Halter dreht. Vorzugsweise werden sie mit einem Rotor um eine parallel zum Halter liegende Achse gedreht. was eine besonders raumsparende Anordnung ermöglicht. Dabei können die βlöcke zur Abstandsbewegung gegenüber dem Rotor bewegt werden oder vorzugsweise wird der Rotor zur Abslandsbewegung als Ganzes bewegt.

In den Zeichnungen ist die Erfindung beispielsweise und schematisch dargestellt.
Es zeigen:
- Fig. 1:: einen Schnitt durch einen erfindungsgemäßen Laborthermostaten mit einem Blockwechselantrieb in einer erster Ausführungsform.
- Fig. 2:: einen Schnitt durch einen erfindungsgemäßen Laborthermostaten mit einem Blockwechselantrieb in einer zweiten Ausführungsform.
- Fig. 3:: einen Temperierblock zur Erzeugung eines Temperaturgradienten in einer ersten Ausführungsform.
- Fig. 3a:: den zu dem in Fig. 3 dargestellten Block gehörigen Temperaturgradienten.
- Fig. 4:: einen Temperierblock zur Erzeugung eines Temperaturgradienten in einer zweiten Ausführungsform.
- Fig. 4a:: den zu dem in Fig. 4 dargestellten Block gehörigen Temperaturgradienten.
- Fig. 5:: einen Temperierblock in Ausicht von der Kontaktierseite her mit vier in Quadrantenanordnung vorgesehenen Temperiereinrichtungen.
- Fig. 6:: eine Draufsicht auf einen Temperierblock entsprechend dem der Fig. 4 mit Detaildarstellung der Aufnahmen und
- Fig. 7:: einen Schnitt nach Linie 7 - 7 in Fig. 6.

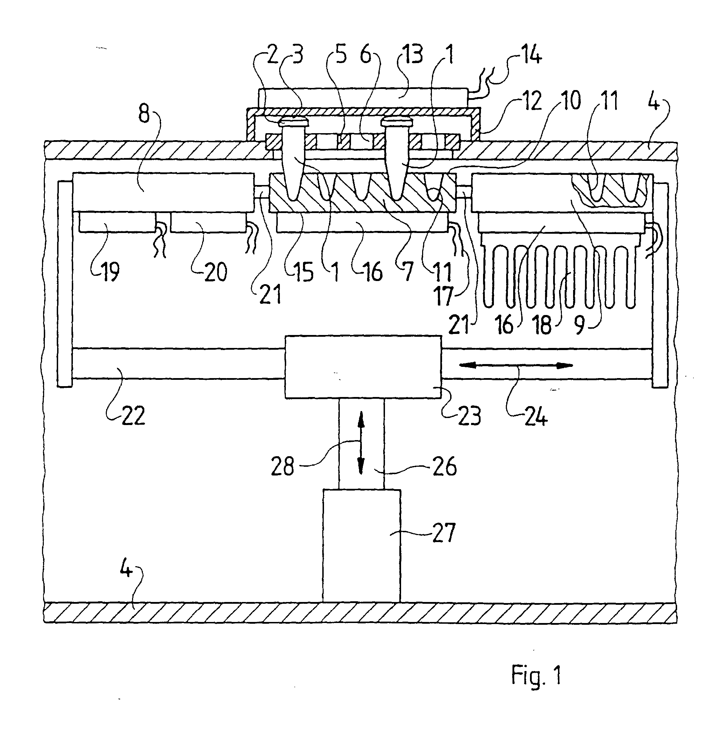

Fig. 1 zeigt einen Laborthermostaten, der insbesondere für den PCR-Prozeß geeignet ist. Probeflüssigkeiten z. B. Reaktionsgemische sollen nacheinander auf unterschiedliche Temperaturen gebracht werden.

Dazu sind die Probeflüssigkeiten in Behältern I vorgesehen, die im dargestellten Ausführungsbeispiel als handelsübliche Reaktionsgefäße aus dünnwandigem Plastikmalerial ausgebildet sind. Sie weisen einen zylindrischen Bereich auf. der. wie Fig. 1 zeigt, in seinein unteren. die Probeflüssigkeit aufnehrnenden Endbereich. sich konisch verjüngt. Der obere Rand weist einen Kragen 2 auf und einen den Behälter 1 verschließenden, elastisch verformbaren Deckel 3.

Der dargestellte Laborthermostat weist ein umschließendes Gehäuse 4 auf. in dessen Oberseite ein als Lochplatte ausgebildeter Halter 5 angeordnet ist. mit Löchern 6. die die Behälter I in Postition halten und an ihren Kragen 2 gegen Herausfallen nach unten sichern.

Unter dem Halter 5 ist ein Temperierblock 7 angeordnet, der an seiner oberen Aufnahmeseite 10 Aufnahmen 11 in Form von Vertiefungen aufweist, welche in ihrer Formgebung der Formgebung der unteren Endbereiche der Behälter 1 entsprechen, Die Anordnung der Aufnahmen 11 in der Fläche der Aufnahmeseite 10 des Blockes 7 entspricht der Anordnung der Löcher 6 im Halter 5 In der dargestellten Stellung des Temperierblockes 7 unter dem Halter 5 bei der die Aufnahmen 11 zu den Löchern 6 fluchten, gelangen alle im Halter 5 befindlichen Behälter 1 mit ihren unteren Endbereichen durch ihren Eingriff mit den Aufnahmen 11 in flächigen Kontakt mit dem Block 7.

Zur Sicherung des gut wärmeleitenden Flächenkontaktes der Behälter 1 mit den Aufnahmen 11 des Blockes 7 ist über dem Halter 5 eine diese abdeckende Dekkelplatte 12 angeordnet. die auf die elastischen Deckel 3 der Behälter 1 drückt. Zu Zwecken der sicheren Temperierung der Probeflüssigkeiten in den Behältern 1 und zum Vermeiden von Kondensation an den Deckeln 3 der Behälter ist die Deckelplatte 12 mit einer ihr anliegenden Temperiereinrichtung 13. beispielsweise einem Peltierelement mit Anschlußleitern 14 auf geeignete Temperatur gebracht.

Der Block 7 steht an seiner der Aufnahmeseite 10 gegenüberliegenden Kontaktierseite 15 in Kontakt mit einer Temperiereinrichtung 16. Diese kann beispielsweise als Peltierelement ausgebildet sein. das über Anschlußleitungen 17 mit Strom versorgt wird. Ein Peltierelement ist für diese Zwecke besonders geeignet. da es je nach Erfordernis zum Heizen oder Kühlen einsetzbar ist.

Mit der Temperiereinrichtung 16 kann der Block 7 auf eine gewünschte Temperatur gebracht werden. Vorzugsweise ist zu diesem Zweck in dem Block 7 an geeigneter Stelle ein Temperatursensor vorgesehen, der über eine elektronische Regeleinrichtung die Temperiereinrichtung 16 derart steuert. daß die Temperatur im Block 7 auf geeigneter Höhe konstant gehalten wird.

Gelangt der Block 7. wie dargestellt. in flächigen Kontakt der Behälter I mit den Vertiefungen 11. so nimmt die Probeflüssigkeit in den Behältern sehr schnell und hochgenau die Temperatur des Blockes 7. also die gewünschte Reaktionstemperatur an.

Im dargestellten Ausführungsbeispiel weist der Laborthermostat zwei weitere Blöcke 8 und 9 auf. die in ihrer Ausbildung mit den als Vertiefungen vorgesehenen Aufnahmen 11 dem bereits erwähnten Block 7 entsprechen. Die Temperierblöcke 8 und 9 sind ebenfalls mit Temperiereinrichtungen versehen. und zwar im Falle des Blockes 9 mit einer Temperiereinrichtung 16 und im Falle des Temperierblockes 8 mit zwei nebeneinander angeordneten Temperiereinrichtungen 19 und 20. die parallel mit gleicher Temperatur betrieben werden können oder auch. wie noch näher zu erläutern ist mit unterschiedlicher Temperatur. Die Temperiereinrichtung 16 unter dem Temperierblock 9 ist mit einem Kühlkörper 18 versehen, der auch bei den anderen Temperiereinrichtungen vorgesehen sein kann und der dann von Vorteil ist, wenn die Temperiereinrichtung als Peltierelement ausgebildet ist. das auf seiner vom Temperierblock abgewandten Fläche Wärme abgeben oder aufnehmen muß.

Die Anordnung der Vertiefungen 11 in allen drei Blöcken 7, 8 und 9 ist identisch. Die Blöcke können also wahlweise in Eingriff mit den Behältern 1 im 1 lalter 5 gebracht werden.

Dazu ist ein Blockwechselantrieb vorgesehen. Die Blöcke 7, 8 und 9 sind untereinander mit Stützen 21 starr in einer Ebene zu einer seitlich verschiebbaren Schlittenkontrukstruktion verbunden. die mit einer Schiebestange 22 in einer Schiebeführung 23 in Richtung des Pfeiles 24 längsverschiebbar gelagert ist. Der auf diese Weise gebildete Seitenantrieb für die Temperierblöcke 7. 8 und 9 ist als Ganzes mit einem Abstandsantrieb höhenverstellbar.

Für den Abstandsantrieb ist die Schiebeführung 23 auf einer Schiebestange 26 befestigt. die in einer Schiebeführung 27 in Richtung des Pfeiles 28 höhenverschiebbar gelagert ist.

Aus der in Figur 1 dargestellten Position der Temperierblöcke mit Eingriff des mittleren Temperierblockes 7 mit den Behälter 1 kann durch Absenken in der Schiebeführung 27 der Block 7 außer Eingriff mit den Behältern gebracht werden. Durch Verstellung der Schiebestange 22 des Seitenantriebes kann nun einer der beiden anderen Blöcke in fluchtende Stellung unter den Halter 5 gebracht werden und nach Aufwärtsverschiebung in der Schiebeführung 27 in Eingriff mit den Behältern 1 gebracht werden.

Auf diese Weise können die im Halter 5 sitzenden Behälter 1 abwechselnd in Wärmekontakt mit den Temperierblöcken 7. 8 oder 9 gebracht werden. Diese können auf unterschiedlichen Temperaturen thermostatisiert gehalten werden. Die Behälter 1 können also in rascher Folge auf unterschiedliche hochgenaue Temperaturen gebracht werden. was insbesondere für PCR-Zwecke gewünscht ist.

Die Aufnahmen 11 in den Temperierblöcken 7. 8 und 9 können, ebenso wie die Löcher 6 im Halter 5. in geeigneter Weise angeordnet werden. beispielsweise in Form von Reihen und Spalten. Nach Abnehmen der Deckelplatte 12 können die Behälter ausgewechselt werden. Sie können beispielsweise auf arbeitssparende Weise zusammen mit dem Halter 5 gemeinsam gewechselt werden, der zu diesem Zweck auswechselbar am Gehäuse 4 vorzusehen ist.

Anstelle der dargestellten drei Temperierblöcke 7. 8 und 9 können in der dargestellten linearen Schlittenanordnung je nach gewünschter Anzahl von Temperaturstufen die Blöcke auch in anderer Anzahl vorgesehen sein.

Es kann auch die Anordnung von Seitenantrieb und Abstandsantrieb anders ausgebildet sein. Beispielsweise können die Blöcke über einzelne Abstandsantriebe mit einem Seitenantrieb verbunden sein.

Der Antrieb der Blöcke zum Zwecke ihres Auswecliselns unter den Behältern 1 kann von Hand erfolgen oder vorzugsweise mittels Motorantrieben. die beispielsweise computergesteuert auf nicht dargestellte Weise den Antrieb der Schiebestange 22 gegenüber ihrer Schiebeführung 23 und den Antrieb der Schiebestange 26 gegenüber ihrer Schiebeführung 27 besorgen. Auf diese Weise kann ein Thermostatisierungszyklus mit gewünschtem Ablauf programmgesteuert erfolgen.

Anstelle des in Figur 1 dargestellten Blockantriebes. bei dem der Seitenantrieb als Schiebeschlitten mit der Schiebeführung 22. 23 ausgebildet ist. kann der Seitenantrieb auch beispielsweise als Karusselantrieb ausgebildet sein. Dabei wären die dargestellten Blöcke 7. 8 und 9 in einer Ebene parallel zum Halter 5 um eine dazu senkrecht liegende Rotationsachse schwenkbar anzuordnen.

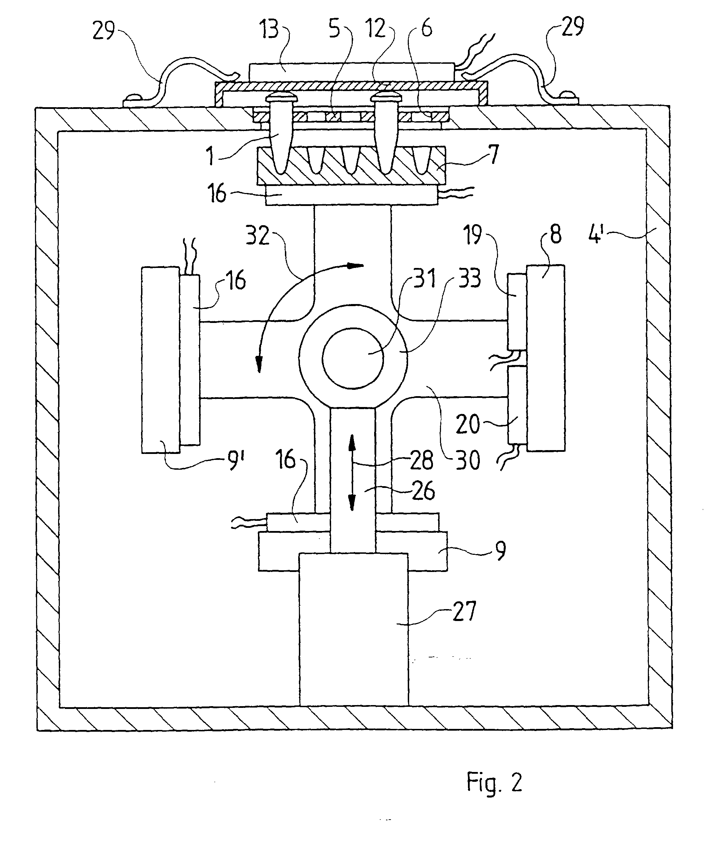

Eine weitere vorteilhafte Ausführungsform des Blockwechselantriebes ist in Figur 2 dargestellt. Teile der Konstruktion entsprechen der der Figur 1. Für übereinstimmende Teile sind. soweit möglich. dieselben Bezugszeichen verwendet.

In der Oberseite eines etwas anders geformten Gehäuses 4' ist der Halter 5 zum Halten von Gefäßen 1 vorgesehen. Es wird wiederum mit einer Deckelplatte 12 abgedeckt. die für Andruck und Temperierung der Gefäße von oben sorgt. Zusätzlich zeigt die Figur 2 lösbare Verriegelungen 29. die auch in Fig. 1 vorgesehen sein können und die die Deckelplatte 12 in der dargestellten Lage sichern.

In der Ausführungsform der Fig. 2 weist der Laborthermostat die drei Temperierblöcke 7. 8 und 9 der Figur 1 auf und zusätzlich einen Temperierblock 9'. der entsprechend ausgebildet ist. Diese Temperierblöcke entsprechen der Ausführungsform der Fig. 1 einschließlich der zugehörigen Temperiereinrichtungen. Der Temperierblock 7 steht in seiner dargestellten Stellung in Eingriff mit den Gefäßen 1 fluchtend unter dem Halter 5.

Im wesentlichen Unterschied zur Ausführungsform der Figur 1 ist die Bewegungseinrichtungen für die Seitenbewegung der Temperierblöcke anders ausgebildet.

Die Blöcke 7. 8. 9 und 9' sind in. 90°-Stellung an einem Rotor 30 befestigt. der um eine Achse 31 in Richtung des Pfeiles 32 rotierbar im kopf 33 der Schiebestange 26 gehalten ist. die gemäß Fig. 1 in Richtung des Pfeiles 28 in der Schiebeführung 27 längsverschiebbar ist.

Zum Wechseln der Temperierblöcke unter dem Halter 5 wird zunächst die Schiebestange 26 mit dein Rotor 30 nach unten gefahren, bis der gerade im Eingriff befindliche Temperierblock außer Eingriff mit den Gefäßen 1 kommt. Sodann wird der Rotor 30 um ein Vielfaches von 90° gedreht. um einen anderen Temperierblock in die Flucht unter dem Halter 5 zu bringen und durch Anheben der Schiebestange 26 in Kontakt mit den Gefäßen 1 zu bringen. Auch hier können wieder nicht dargestellte motorische Antriebe vorgesehen sein. die z.B. von einer Computersteuerung zu vollautomatischem Ablauf gesteuert werden.

Wie der Vergleich der Figuren 1 und 2 zeigt. ist die Ausführungsform der Fig. 2 mit rotierendem Antrieb der Temperierblöcke von kompakterer Bauweise.

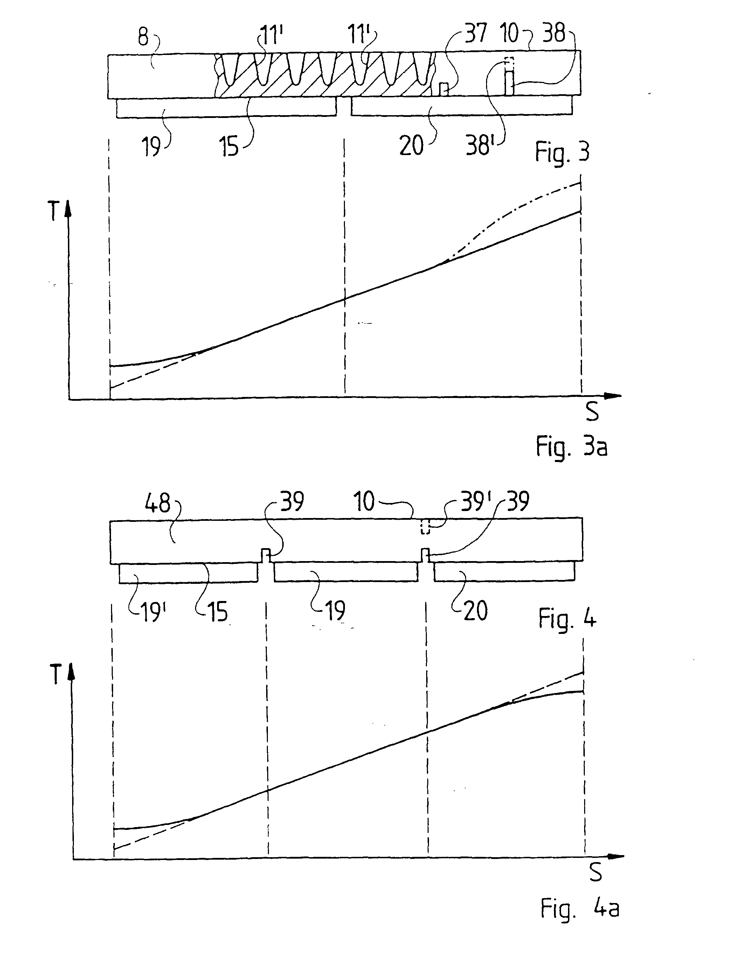

Fig. 3 zeigt den Temperierblock 8 der Figuren 1 und 2 mit seinen beiden Temperiereinrichtungen 19 und 20 in Seitenansicht. Die als Vertiefungen zur Aufnahme der Behälter ausgebildeten Aufnahmen 11' sind hier etwas kleiner und in größerer Zahl dargestellt. Die Aufnahmen 11' können in Reihen und Spalten geordnet auf der Aufnahmeseite 10 vorgesehen sein. Sie dienen der Aufnahme einer größeren Zahl von Behältern zu deren Temperierung.

Die Temperiereinrichtungen 19 und 20. die dem Block 8 von der Kontaktierseite 15 her anliegen, können vorzugsweise als Peltierelemente vorgesehen sein mit in Fig. 3 nicht dargestellten Anschlußleitungen zur Strombeaufschlagung. Damit können beliebige Temperatuien heizend oder kühlend eingestellt werden. Die Temperiereinrichtungen 19 und 20 können aber auch beispielsweise als flüssigkeitsdurchströmte Wärmetauscher, die z.B. über Schlauchleitungen versorgt werden. ausgebildet sein.

Die Temperiereinrichtungen 19 und 20 können- auf gleiche Temperatur gebracht werden oder auch auf unterschiedliche Temperaturen. Nicht dargestellte Temperaturfühler im Block oberhalb der Temperiereinrichtungen können mit einer die Wärmezu- und -abfuhr durch die Temperiereinrichtungen steuernden Regeleinrichtung verbunden sein.

In der Ausführungsform der Fig. 3 liegen die Temperiereinrichtungen 19 und 20 je etwa der halben Fläche der Kontaktierseite 15 an. Der gute Wärmekontakt kann durch Verklebung, Verscluaubung oder sonstige Befestigung gesichert sein.

Werden die Temperiereinrichtungen 19 und 20 auf unterschiedliche Temperatur gebracht. wobei im dargestellten Fall die Temperiereinrichtung 20 auf höherer Temperatur liegt, so eigibt sich ein Temperaturverlauf über die Länge des Temperierblockes 8. der in Fig. 3a dargestellt ist. Die Temperiereinrichtung 20 führt dem Temperierblock 8 laufend Wärme zu. während die Temperiereinrichtung 19 kühlend dem Temperierblock Wärme entzieht. Wärme fließt also durch den Temperierblock 8 zwischen den Temperiereinrichtungen 20 und 19.

Es ergibt sich, wie die Temperaturkurve der Fig. 3a zeigt, in der die Temperatur T über der Stiecke S dargestellt ist, im mittleren Bereich des Temperierblockes 8 ein linearer Temperaturverlauf. Zum linken Ende hin, also über der Temperiereinrichtung 19, flacht die Temperaturkurve ab. da zum linken Ende des Temperierblockes 8 hin der heizende Einfluß der Temperiereinrichtung 20 immer mehr abnimmt.

Auf der rechten Seite, also über der Temperiereinrichtung 20, verläuft gemäß Fig. 3a die Temperatur linear bis zum Ende des Temperierblockes. Dafür sorgen zwei parallel zur Grenze zwischen den mit den Temperiereinrichtungen 19 und 20 kontaktierten Feldern der Kontaktierseite 15 verlaufende Nuten 37 und 38. Diese Nuten schwächen den Querschnitt des Temperierblockes 8 und sorgen in Richtung des Wärmestromes. der im Block von der heizenden Temperiereinrichtung 20 zur kühlenden Temperiereinrichtung 19 verläuft, für eine örtliche Erhöhung des Wärmeleitwiderstandes des ansonsten gut leitenden Blockes. der beispielsweise aus Metall besteht. Da die Steilheit des Temperaturgradienten der in Fig. 3a dargestellten Temperaturkurve proportional zum Produkt aus Wärmestrom und Wärmeleitwiderstand ist, kann durch örtliche Veränderung des Wärmeleitwiderstandes die Form der Temperaturkurve beeinflußt und insbesondere. wie die Fig. 3a zeigt, die Kurve linearisiert werden. Vorteilhaft sind dazu die Nuten 37 und 38 unterschiedlich tief. also mit unterschiedlicher Querschnittsschwächung des Blockes. ausgebildet. Die Tiefe und Anordnung der Nuten 37 und 38 in Fig. 3 ist nur beispielsweise. Die genaue Tiefe. Lage und Anzahl der Nuten kann z. B. in Versuchen ermittelt werden.

Figur 3a zeigt, daß auf der linken Seite des Temperierblockes 8 zu seinem Ende hin das Temperaturprofil abflacht. Auf der rechten Seite, also über der Temperiereinrichtung 20 ist diese Abflachung ausgeglichen durch Vorsehen der Nuten 37 und 38. Wie Figur 3 zeigt ist dabei die Nut 38 tiefer ausgebildet als die Nut 37, da sie näher zum rechten Rand des Blockes hin liegt, also in einem Bereich, in dem der Wärmestrom von der Temperiereinrichtung 20 zur Temperiereinrichtung 19 geringer ist als an der Stelle der Nut 37. Um denselben Temperaturgradienten an der Stelle der Nut 38 zu erzeugen, ist ein höherer Wärmeleitwiederstand also eine liefere Nut erforderlich. Wird die Nut 38 noch weiter vertieft, wie gestrichelt mit 38' angedeutet, so kann das Temperaturprofil in diesem Bereich weiter angehoben werden, wie in Figur 3a strichpunktiert dargestellt.

Fig. 4 zeigt in Darstellung entsprechend Fig. 3 einen Temperierblock 48 mit drei Temperiereinrichtungen 19', 19 und 20. Wird mit der Temperiereinrichtung 20 geheizt und mit der Temperiereinrichtung 19' gekühlt, so ergibt sich die in Fig. 4a dargestellte Temperaturkurve. Zu den Enden der Kurve hin, also über den Temperiereinrichtungen 19' und 20, flacht die Kurve ab. da Nuten über den Temperiereinrichtungen, wie die Nuten 37 und 38 (Fig. 3) fehlen.

Über die mittlere Temperiereinrichtung 19 hinweg ergibt sich ein linearer Temperaturgradient. Die mittlere Temperiereinrichtung 19 kann mit einer mittleren Temperatur betrieben werden oder bedarfsweise auch abgeschaltet sein. Sie wird benötigt, um eine etwaige Abweichung der Temperaturkurve in der Mitte des Blockes zu verhindern und wird insbesondere auch benötigt, wenn die Temperaturkurve insgesamt auf ein anderes Niveau rasch verschoben werden soll. Ferner wird sie benötigt, wenn alternativ der gesamte Block auf dieselbe Temperatur gebracht werden soll.

Für die erforderliche genaue Einstellug der Temperatur im Temperierblock 48 müssen die Temperaturen geregelt werden. Dazu sind die Temperiereinnchtungen 19', 19 und 20 jeweils in einem eigenen Regelkreis über nicht dargestellte Temperatursensoren gesteuert, die im Block 48 oberhalb der einzelnen Temperiereinrichtungen vorgesehen sind. Zwischen den Regelkreisen findet Wärmeaustausch durch Wärmefluß im Block zwischen den Temperiereinrichtungen statt. Dies führt zu Wechselwirkungen der Regelkreise, wodurch schwer beherrschbare Regelschwingungen entstehen können.

Diese Regelschwingungen lassen sich verringern durch Verringerung des Wärmestromes zwischen den Temperiereinrichtungen. Im Ausführungsbeispiel der Fig. 4 sind dazu den Wärmeleitwiderstand zwischen den Temperiereinrichtungen erhöhende Nuten 39 an den Grenzen zwischen den mit den Temperiereinrichtungen 19', 19 und 20 belegten Feldern der Kontaktierseite 15 vorgesehen.

Wie die Fig. 4 weiter zeigt, können die Nuten 39 auch, wie gestrichelt mit der Nut 39' dargestellt, von oben, also in die Aufnahmeseite 10, eingebracht sein. Auch die Nuten 37 und 38 der Fig. 3 können alternativ von oben, also von der Aufnahmeseite 10 her, in den Block eingebracht sein.

In den Figuren 3 und 4 sind Nuten 37, 38 und 39 dargestellt, die zu unterschiedlichen Zwecken den Wärmestrom durch den Temperierblock behindern sollen, indem sie den Querschnitt des Blockes schwächen und somit an dieser Stelle die Wärmeleitfähigkeit verringern bzw, den Wärmeleitwiderstand erhöhen. An Stelle der dargestellten Nuten können auch andere Möglichkeiten verwendet werden, örtlich die Wärmeleitfähigkeit des Blockes zu verändern. An Stelle der Nuten können auch auf andere Weise Abschnitte im Temperierblock vorgesehen sein, die eine andere Wärmeleitfähigkeit bzw, einen anderen Wärmeleitwiderstand aufweisen, als die anderen Stellen des Blockes. Solche Abschnitte können z. B. dadurch geschaffen werden, daß der Block an dieser Stelle getrennt ist und eine Zwischenlage aus einem Material höheren Leitwiderstandes eingesetzt ist. Die genannten Abschnitte können ebenso wie die in den Figuren 3 und 4 dargestellten Nuten in beliebiger Linienführung den Block durchlaufen, vorzugweise jedoch quer zum Wärmestrom in gerader Linie zwischen zwei Rändern des Blockes. So laufen vorzugsweise die in den Figuren 3 und 4 dargestellten Nuten quer zum Block 8 bzw. 48, also senkrecht zur Zeichnungsebene durch den gesamten Block.

Der in den Figuren 3 und 4 dargestellte Temperierblock 8 bzw. 48 ist mit zwei Temperiereinrichtungen 19 und 20 oder drei Temperiereinrichtungen 19', 19 und 20 versehen, die sich jeweils über die gesamte Breite des Blockes erstrecken. Ein Temperaturgradient kann in diesem Block also nur, wie die Temperaturkurven der Figuren 3a und 4a zeigen, in Längsrichtung, also in der Zeichnung von links nach rechts, eingestellt werden.

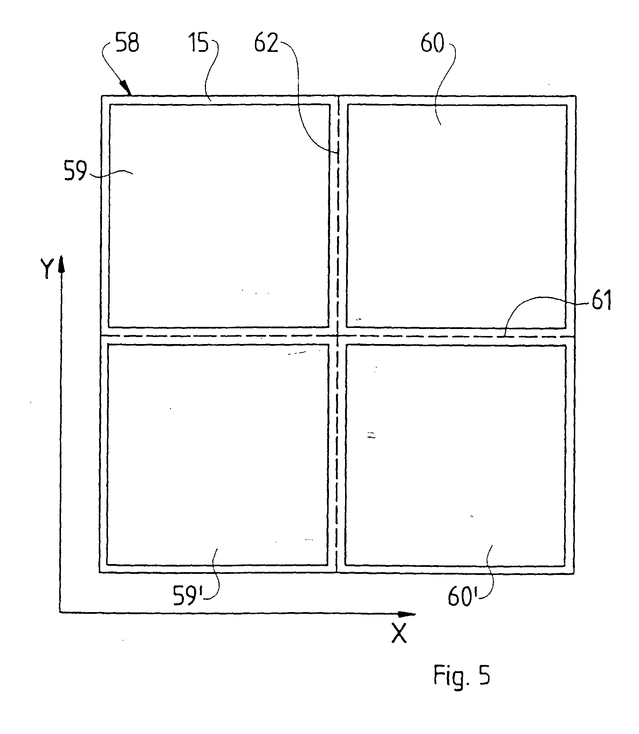

Fig. 5 zeigt eine Variante eines Temperierblockes 58, dessen Kontaktierseite 15 mit Feldgrenzen 61 und 62 in vier Quadrantenfelder mit Temperiereinrichtungen 59, 60, 59' und 60' belegt sind. Werden die Temperiereinrichtungen 59 und 59' gleich betrieben, z.B. kühlend, und auch die Temperiereinrichtungen 60 und 60' auf gleicher Temperatur betrieben, so ergibt sich auf dem Temperierblock 58 ein Temperaturgradient in Richtung der x-Achse, Werden die Temperiereinrichtungen 59 und 60 auf gleicher Temperatur betrieben und auch die Temperiereinrichtungen 59 und 60' auf gleicher Temperatur, so ergibt sich in senkrechter Richtung dazu, also in y-Richtuny, ein Temperaturgradient. Werden alle Temperiereinrichtungen mit gleicher Temperatur betrieben, so ergibt sich eine konstante Temperatur über den gesamten Temperierblock 58.

Die Möglichkeit der Erzeugung von Temperaturgradienten abwechselnd in x-Richtung oder y-Richtung erlaubt eine Betriebsvariante, bei der der Temperierblock 58 nacheinander auf zwei unterschiedlichen Temperaturniveaus betrieben wird, beispielsweise bei einem Temperaturniveau von 30° und bei einem Temperaturniveau von 60°. Für beide Temperaturniveaus soll die genaue optimale Temperatur ermittelt werden. Das kann in einem Druchlauf erfolgen, wobei zunächst der Temperierblock bei dem Niveau von 30° in x-Richtung mit einem Gradienten betrieben wird der Temperaturen auf dem Temperierblock von beispielsweise 28°, 29°, 30°, 31°, 32° erzeugt. Anschließend wird der Temperierblock auf das Temperaturniveau 60° gebracht mit einem Temperaturgradienten in y-Richtung, wobei dan in y-Richtung unterschiedliche Temperaturen von z. B. 58°, 59°, 60°, 61°, 62° erzeugt weiden. Ist der Temperierblock dabei über seine Fläche hin in regelmäßigen Zeilen (x-Richtung) und Spalten (y-Richtung) mit zu temperierenden Proben bestückt, so kann man diese anschließend auswerten und feststellen, welche dieser Proben optimal temperiert wurden. Bei diesen lag auf beiden Temperierniveaus die optimale Temperatur vor.

Interessant ist auch eine weitere mögliche Betriebsvariante, bei der gleichzeitig alle vier Temperiereinrichtungen auf unterschiedlichen Temperaturen gehalten werden. Dann läßt sich ein komplexes Temperaturfeld einstellen mit unterschiedlichen Temperaturen sowohl in x-Richtung als auch in y-Richtung. So kann z.B. in x-Richtung ein größerer Temperaturgradient und in y-Richtung ein kleinerer Temperaturgradient eingestellt werden. Sind auf der Aufnahmeseite des Temperierblockes 58 Aufnahmen für Gefäße in Reihen (x-Richtung) und Spalten (y-Richtung) vorgesehen, so können beispielsweise zwischen den Reihen Temperaturunterschiede von 1° und innerhalb der Reihen zwischen den Spalten Temperaturunterschiede von 1/10° eingestellt werden. Es lassen sich damit Temperaturunterschiede von beispielsweise 10° mit einer Auflösung von 1/10° einstellen.

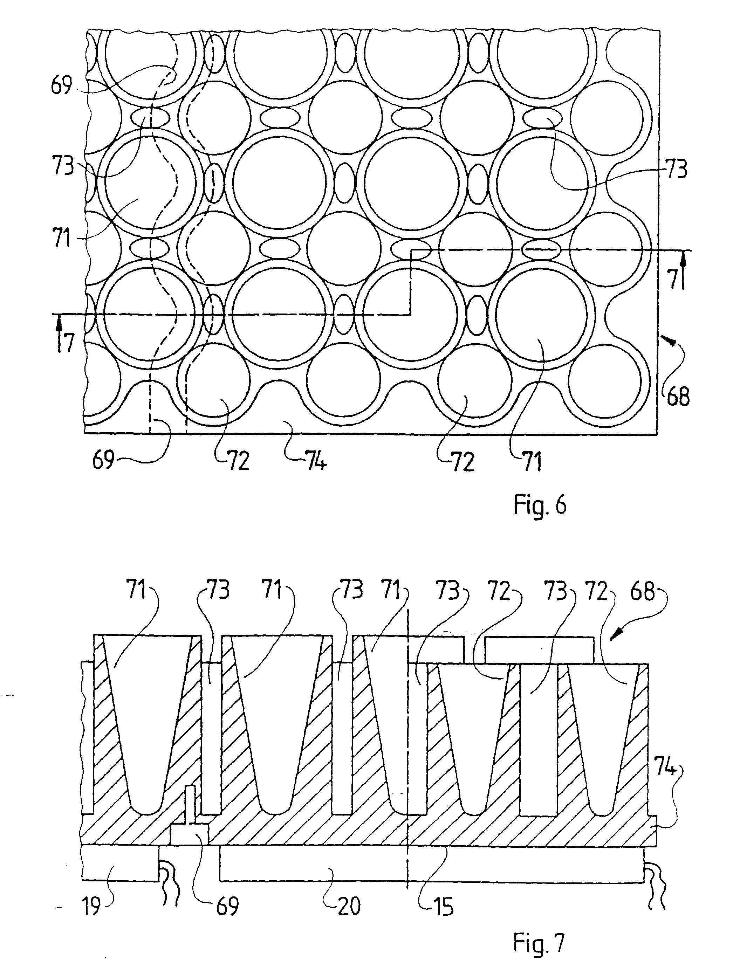

Die Figuren 6 und 7 zeigen in Draufsicht auf die Aufnahmeseite und im Schnitt einen Temperierblock 68, der in seinem grundsätzlichen Aufbau dem bereits erläuterten Temperierblock 8 entspricht, der also mit zwei Temperiereinrichtungen 19 und 20 von seiner Kontaktierseite 15 her kontaktiert ist.

Von der Aufnahmeseite her sind in den Block zwei unterschiedliche Arten von Aufnahmen 71 und 72 als unterschiedlich große Vertiefungen eingebracht.

Wie Fig. 6 zeigt, sind die beiden Arten von Aufnahmen 71 und 72 in einem rechtwinkligen Gitter ineinandergeschachtelt derart angeordnet, daß jeweils zwischen vier Aufnahmen 71 der ersten Art eine Aufnahme 72 der zweiten Art liegt und umgekehrt. Wie Fig. 7 zeigt, entsteht dadurch eine Filigrane Blockkonstruktion mit sehr stark geschwächtem Querschnitt im oberen Bereich des Blockes, also zu seiner Aufnahmeseite hin. Zusätzlich sind zwischen den Aufnahmen 71 und 72 noch ovale Löcher 73 eingebracht, die jeweils in der Mitte zwischen zwei größeren Aufnahmen 71 und zwei kleineren Aufnahmen 72 liegen, wie die Fig. 6 zeigt. Dadurch wird der Temperierblock 70 in seinem oberen Bereich zusätzlich geschwächt. Wärmeleitung zwischen den Temperiereinrichtungen 20 und 19 findet also weniger in seinem oberen, durch die Aufnahmen 71, 72 und die Löcher 73 geschwächten Dickenbereich statt, sondern im Bereich der unteren, durchgehenden Platte 74, die unter allen Aufnahmen 71, 72 und den Löchern 73 durchgehend verläuft.

Wie Figur 6 zeigt, ist bei der dargestellten Konstruktion das Volumen des Temperierblockes 68 insbesondere in seinem oberen, der Kontaktierseite 15 abgewandt liegenden dicken Bereich sehr weitgehend verringert. Dadurch ist die Wärmekapazität des Temperierblockes stark verringert. Dies gibt die Möglichkeit, den Teinperierblock sehr schnell auf eine gewünschte Temperatur zu bringen, beispielsweise von einem Temperaturniveau auf ein anderes Temperaturniveau zu heizen oder zu kühlen. Es ergibt sich also für den in Figur 1 oder 2 dargestellten Laborthermostaten die Möglichkeit, in einem der dargestellten Temperierblöcke mehrere Temperaturniveaus nacheinander zu betreiben. So können insbesondere benachbarte Temperaturniveaus in einem Temperierblock betrieben werden, während für ein weiter entferntes Temperaturniveau ein anderer Temperierblock verwendet wird. Bei den üblichen drei Temperaturniveaus für den PCR-Prozesses können z. B. zwei der Temperaturniveaus in einem Block und eines in einem zweitem Block betrieben werden. Hilfreich dabei ist auch die in den Figuren dargestellte großflächige Kontaktierung des Temperierblockes mit den Temperiereinrichtungen, die einer sehr raschen Aufheizung oder Abkühlung dienlich ist.

Die in den Figuren 6 und 7 dargestellte sehr massearme Ausbildung des Temperierblockes 68 sorgt aber nicht nur für eine stark verringerte Wärmekapazität des Temperierblockes, sonderen ergibt auch eine geringe Wärmeleitfähigkeit bzw. einen hohen Wärmeleitwiderstand des Temperierblockes in Richtung des Wärmetransportes zwischen den Temperiereinrichtungen 20 und 19. Zur Erzielung eines gewünschten Temperaturprofiles bzw. eines Temperaturgradienten, wie er beispielsweise in den Figuren 3a und 4a dargestellt ist, wird angesichts des hohen Wärmeleitwiderstandes nur ein geringer Wärmestrom benötigt. Die Temperiereinrichtungen 19 und 20 können daher mit geringer Leistung ausgebildet sein.

Der in den Figuren 6 und 7 dargestellte Temperierblock 68 weist eine Nut 69 auf, die die an Hand der Fig. 4 erläuterte Funktion der thermischen Entkopplung zwischen den Temperiereinrichtungen 20 und 19 erfüllt. Die Nut 69 ist, wie Fig. 7 im Schnitt zeigt, stufenförmig ausgebildet, um möglichst tief zwischen die Aufnahmen 71, 72 und die Löcher 73 reichen zu können, ohne jedoch diese zu berühren. Wie Fig. 6 (gestrichelt) zeigt, ist die Nut 69 zu diesem Zweck mäanderförmig zwischen den Vertiefungen und Löchern sich hindurchwindend angeordnet. Der dargestellte Temperierblock 68 kann beispielsweise formgegossen oder mit einer numerisch gesteuerten Fräsmaschine hergestellt werden, beispielsweise aus Aluminium.

Ähnlich wie in Figur 4 mit der gestrichelten Nut 39 angedeutet, kann auch bei der Ausführungsform der Figuren 6 und 7 die Nut 69 von der Aufnahmeseite, also in Figur 7 von oben in den Temperierblock 68 eingebracht sein. Sie kann beispielweise quer durch die Vertiefungen 71, 72 und Löcher 73 verlaufen oder auch mäanderförmig diese umlaufend ausgebildet sein, beispielweise als sehr schmaler und tiefer Schlitz.

## Patentansprüche

1. Temperierblock (68) für Laborthermostaten, mit einer Aufnahmeseite mit Aufnahmen in Form von Vertiefungen (71, 72) zur großflächig kontaktierenden Aufnahme der gefüllten unteren Bereiche von mit Probeflüssigkeit gefüllten Behältern und mit wenigstens einer mit dem Temperierblock kontaktierten Temperiereinrichtung (19, 20),wobei zwei Arten von Aufnahmen (71, 72) für unterschiedliche Gefäße jeweils in gleichen und parallelen rechtwinkligen Flächengitter angeordnet sind, welche in beiden Gitterrichtungen um einen halben Gitterabstand zueinander versetzt sind, **dadurch gekennzeichnet, daß** die beiden Arten von Aufnahmen (71, 72) unterschiedliche Durchmesser aufweisen, und daß der Gitterabstand und die Durchmesser derart gewählt sind, daß jede Aufnahme der einen Art die vier benachbarten Aufnahmen der anderen Art unter Belassung eines schmalen Zwischensteges berührt.

2. Temperierblock nach Anspruch 1, **dadurch gekennzeichnet, daß** die Aufnahmen (71, 72) der einen Art einer vorgegebenen Gitteranordnung von Gefäßen angepaßt sind.

3. Temperierblock nach Anspruch 1, **dadurch gekennzeichnet, daß** jeweils zwischen zwei Aufnahmen (71, 72) der einen Art und zwei Aufnahmen (72, 71) der anderen Art ein Loch (73) vorgesehen ist.

4. Temperierblock nach Anspruch 1 oder Anspruch 3, **dadurch gekennzeichnet, daß** der Temperierblock (68) unterhalb der Vertiefungen (71, 72) sowie gegebenenfalls der Löcher (73) eine durchgehende Platte (74) ausbildet.

5. Temperierblock nach Anspruch 4 mit einem Abschnitt erhöhten Wärmeleitwiderstandes des Temperierblockes, **dadurch gekennzeichnet, daß** der Abschnitt als Nut (69) ausgebildet ist.

6. Temperierblock nach Anspruch 5, **dadurch gekennzeichnet, daß** die Nut (69) von der der Aufnahmeseite gegenüberliegenden Kontaktierseite (15) her in der Platte (74) ausgebildet ist.

7. Temperierblock nach Anspruch 5, **dadurch gekennzeichnet, daß** die Nut (69) mit einer Tiefe, die größer ist als die Dicke der Platte (74), mäanderförmig zwischen den Vertiefungen (71, 72) und Löchern (73) verlaufend angeordnet ist.

8. Temperierblock nach Anspruch 1, **dadurch gekennzeichnet, daß** an einer der Aufnahmeseite gegenüberliegenden Kontaktierseite (15) mehrere Temperiereinrichtungen (19, 20) vorgesehen sind, die mit aneinandergrenzenden Feldern der Kontaktierseite in großflächigem Kontakt stehen und den Temperierblock (69) unterschiedlich temperieren.

9. Temperierblock nach Anspruch 1, **dadurch gekennzeichnet, daß** mehrere Temperierblöcke (7, 8, 9, 9') gegenüber einem die Behälter (1) tragenden Halter (5) bewegbar und abwechselnd in fluchtende Lage ihre Aufnahmen (11, 71, 72) zu den Behältern (1) bringbar sind.

## Claims

1. Temperature regulating block (68) for laboratory thermostats including a receiving side with receptacles in the form of recesses (71, 72) for receiving the filled lower regions of containers filled with sample liquid with contact over a large surface area and including a temperature regulating device (19, 20) contacting the temperature regulating block, whereby two types of receptacles (71, 72) are provided for different vessels in the same and parallel right-angled flat lattices, which are offset from one another in both lattice directions by half a lattice pitch, **characterised in that** the two types of receptacles (71, 72) have different diameters and that the lattice pitch and the diameters are so selected that each receptacle of the one type contacts the four adjacent receptacles of the other type whilst leaving a narrow intervening web.

2. Temperature regulating block as claimed in Claim 1, **characterised in that** the receptacles (71, 72) of the one type are matched to a predetermined lattice arrangement of container.

3. Temperature regulating block as claimed in Claim 1, **characterised in that** provided between each two receptacles (71, 72) of the one type and two receptacles (72, 71) of the other type there is a hole (73).

4. Temperature regulating block as claimed in Claim 1 or Claim 3, **characterised in that** the temperature regulating block (68) affords a continuous plate (74) below the recesses (71, 72) and optionally the holes (73).

5. Temperature regulating block as claimed in Claim 4 with a section of increased thermal conduction resistance of the temperature regulating block, **characterised in that** the section is constructed in the form of a groove (69).

6. Temperature regulating block as claimed in Claim 5, **characterised in that** the groove (69) is formed in the plate (74) from the contact side (15) opposite to the receiving side.

7. Temperature regulating block as claimed in Claim 5, **characterised in that** the groove (69) is arranged to extend in a serpentine shape between the recesses (71, 72) and holes (73) with a depth, which is larger than the thickness of the plate (74).

8. Temperature regulating block as claimed in Claim 1, **characterised in that** provided on a contact side (15) opposite to the receiving side there is a plurality of temperature regulating devices (19, 20), which are in large area contact with adjoining fields of the contact side and regulate the temperature of the temperature regulating block (69) differently.

9. Temperature regulating block as claimed in Claim 1, **characterised in that** a plurality of temperature regulating blocks (7, 8, 9, 9') are movable with respect to a holder (5) carrying the containers (1) and are movable alternately into an aligned position of their receptacles (11, 71, 72) with respect to the containers (1).

## Revendications

1. Bloc de régulation de température (68) pour thermostats de laboratoire, avec une face de réception dotée de logements sous forme de cavités (71, 72) destinées à recevoir, en contact couvrant, les parties inférieures remplies de tubes contenant des échantillons liquides, et avec au moins un dispositif de régulation de température (19, 20) en contact avec le bloc de régulation de température, deux types de cavités (71, 72) étant prévues pour différents tubes et agencées selon des réseaux plans orthogonaux identiques parallèles et décalés dans les deux sens du réseau de la longueur d'une demi maille, **caractérisé en ce que** les deux types de cavités (71, 72) présentent des diamètres différents, l'écartement des réseaux et les diamètres étant choisis de façon à ce que chaque cavité d'un type est contiguë aux quatre cavités de l'autre type en réservant entre elles une mince barrette intermédiaire.

2. Bloc de régulation de température selon la revendication 1, **caractérisé en ce que** les cavités (71, 72) d'un type sont adaptées à un agencement prédéfini de tubes.

3. Bloc de régulation de température selon la revendication 1, **caractérisé en ce qu'**un alésage (73) est prévu entre chaque paire de cavités (71, 72) d'un type et chaque paire de cavités (71, 72) de l'autre type.

4. Bloc de régulation de température selon la revendication 1 ou la revendication 3, **caractérisé en ce que** le bloc de régulation de température (68) présente en-dessous des cavités (71, 72) ainsi que, le cas échéant, des alésages (73) une plaque (74) continue.

5. Bloc de régulation de température selon la revendication 4 avec une section du bloc présentant une inertie thermique accrue, **caractérisé en ce que** la section en question est réalisée sous forme de cannelure (69).

6. Bloc de régulation de température selon la revendication 5, **caractérisé en ce que** la cannelure (69) est formée dans la plaque (74) sur la face de contact (15) opposée à la face de réception.

7. Bloc de régulation de température selon la revendication 5, **caractérisé en ce que** la cannelure (69) est d'une profondeur supérieure à l'épaisseur de la plaque (74) et agencée de façon à former des méandres entre les cavités (71, 72) et les alésages (73).

8. Bloc de régulation de température selon la revendication 1, **caractérisé en ce que** plusieurs dispositifs de régulation de température (19, 20) sont prévus sur une face de contact (15) opposée à la face de réception, lesquels blocs se trouvent en contact couvrant avec les zones adjacentes de la face de contact et tempèrent différemment le bloc de régulation de température (69).

9. Bloc de régulation de température selon la revendication 1, **caractérisé en ce que** plusieurs blocs de régulation de température (7, 8, 9, 9') sont mobiles par rapport à un support (5) portant les tubes (1), les logements (11, 71, 72) de ces blocs pouvant être alternativement positionnés en alignement précis avec les tubes (1).
